# EUROPEAN PATENT APPLICATION

(11) **EP 4 742 390 A1**
(43) Date of publication of application: **13.05.2026**
(21) Application number: 23944701.4
(22) Date of filing: 12.07.2023
(51) Int. Cl.: H01M 50/188, H01M 50/147, H01M 50/184

(54) **END CAP ASSEMBLY, ENERGY STORAGE APPARATUS AND ELECTRIC DEVICE**

(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: LI, Maosong, Xiamen, Fujian 361100 (CN); TAN, Jiben, Xiamen, Fujian 361100 (CN)
(74) Representative: Santarelli
(86) International application number: PCT/CN2023/107084
(87) International publication number: WO 2025/010681

(57) **Abstract**

An end cover assembly (4), an energy-storage apparatus (3), and an electricity-consumption device (2) are provided. The end cover assembly (4) includes a top cover (41), an upper plastic member (42), a terminal post (43), and a sealing member (44). The upper plastic member (42) includes a body (421), a first protruding ring (422), and a second protruding ring (423). The body (421) is disposed on a first surface (411). The first protruding ring (422) is disposed on a side of the body (421) facing the first surface (411). The second protruding ring (423) is disposed on a side of the first protruding ring (422) facing away from the body (421). The second protruding ring (423) abuts against a surface of the sealing member (44) facing the upper plastic member (42), to cause a surface of the sealing member (44) facing away from a hole wall of an assembly hole (413) to abut against a peripheral side surface of the terminal post (43), thereby improving the sealing performance of the sealing member (44).

## Description

### TECHNICAL FIELD

The present disclosure relates to the field of energy-storage apparatus technology, and in particular, to an end cover assembly, an energy-storage apparatus, and an electricity-consumption device.

### BACKGROUND

In the related art, an upper plastic member is formed by injection molding, and then a top cover, a terminal post, a sealing member, and the upper plastic member are assembled to obtain an assembled end cover assembly. However, since the injection-molded upper plastic member requires cooling, the end cover assembly requires a relatively long time in assembly, resulting in low assembly efficiency.

In the disclosure, a riveting process is used to connect a riveting member to a terminal post, thereby achieving fixation of the top cover, the terminal post, the sealing member, and the upper plastic member, so as to obtain an assembled end cover assembly. This assembly method can reduce assembly time and improve assembly efficiency. However, in the riveting process, the sealing member is susceptible to compression, causing deformation of the sealing member. This could reduce the performance of connection between the sealing member and the terminal post and degrade the sealing performance of the sealing member, which in turn increases the likelihood of liquid leakage in an energy-storage apparatus.

### SUMMARY

In view of this, the disclosure provides an end cover assembly, an energy-storage apparatus, and an electricity-consumption device. A second protruding ring of an upper plastic member can abut against a surface of a sealing member facing the upper plastic member, to cause the sealing member to abut against a peripheral side surface of a terminal post, thereby improving the sealing performance of the sealing member.

In a first aspect of the disclosure, an end cover assembly is provided. The end cover assembly includes a top cover, an upper plastic member, a terminal post, and a sealing member. The top cover has a first surface and a second surface opposite to the first surface. An assembly hole is defined in the top cover, and the assembly hole penetrates through the first surface and the second surface. The upper plastic member includes a body, a first protruding ring, and a second protruding ring. The body is disposed on the first surface. The first protruding ring is disposed on a side of the body facing the first surface and located in the assembly hole. The second protruding ring is disposed on a side of the first protruding ring facing away from the body and located in the assembly hole. A distance from an inner sidewall surface of the first protruding ring to a hole wall of the assembly hole is greater than a distance from an inner sidewall surface of the second protruding ring to the hole wall of the assembly hole. The body, the first protruding ring, and the second protruding ring cooperatively define a through hole. The terminal post passes through the assembly hole and the through hole. The sealing member is sleeved on a periphery of the terminal post and located in the assembly hole. A surface of the second protruding ring facing away from the first protruding ring abuts against a surface of the sealing member facing the upper plastic member, to cause a surface of the sealing member facing away from the hole wall of the assembly hole to abut against the peripheral side surface of the terminal post.

The end cover assembly provided in the first aspect of the disclosure includes the top cover, the upper plastic member, the terminal post, and the sealing member. The second protruding ring of the upper plastic member abuts against the surface of the sealing member facing the upper plastic member, to cause the surface of the sealing member facing away from the hole wall of the assembly hole to abut against the peripheral side surface of the terminal post. It may be understood as that the second protruding ring can compress the sealing member in an axial direction of the terminal post, applying a compressive force to the sealing member in the axial direction of the terminal post, so that the sealing member deforms in a radial direction of the terminal post to abut against and seal the peripheral side surface of the terminal post. In other words, the second protruding ring compresses the sealing member in an axial direction of the sealing member, causing the sealing member to be compressed and deformed, and to extend outward in a radial direction of the sealing member to abut against and seal the peripheral side surface of the terminal post.

Furthermore, the distance from the inner sidewall surface of the first protruding ring to the hole wall of the assembly hole is greater than the distance from the inner sidewall surface of the second protruding ring to the hole wall of the assembly hole. Therefore, there is a gap between the terminal post and the second protruding ring located in the assembly hole. When the second protruding ring compresses the sealing member, at least a portion of the sealing member may be located between the second protruding ring and the terminal post, abutting against and sealing the peripheral side surface of the terminal post.

Therefore, in the end cover assembly of disclosure, the second protruding ring of the upper plastic member abuts against the sealing member, and the sealing member abuts against the peripheral side surface of the terminal post, so that the performance of connection between the sealing member and the terminal post can be improved. In this way, the sealing performance of the sealing member is enhanced, and thus the likelihood of liquid leakage in the end cover assembly is reduced, and the likelihood of liquid leakage in the energy-storage apparatus is reduced.

The first protruding ring has a third surface facing the second protruding ring, and the sealing member abuts against the third surface located between the second protruding ring and the terminal post.

A surface of the second protruding ring closer to the hole wall of the assembly hole is flush with a surface of the first protruding ring closer to the hole wall of the assembly hole.

A surface of the second protruding ring facing away from the first protruding ring is closer to the first surface than the second surface.

The upper plastic member satisfies at least one of the following conditions: a surface junction between the second protruding ring and the first protruding ring has an arc chamfer; or the second protruding ring has a top surface facing away from the first protruding ring and a side surface connected to the top surface in a bending manner, where the side surface is further connected to the first protruding ring, and a junction between the top surface and the side surface has an arc chamfer.

A height *H*1 from a surface of the second protruding ring facing away from the body to a surface of the first protruding ring facing away from the body satisfies: 0.20mm ≤ *H*1 ≤ 0.30mm.

The end cover assembly further includes a riveting member mounted to a side of the body facing away from the first protruding ring. The riveting member is sleeved on and connected to the terminal post. An orthographic projection of the riveting member on the body facing the first surface covers both an orthographic projection of the first protruding ring on the body facing the first surface and an orthographic projection of the second protruding ring on the body facing the first surface.

An annular recess is defined on a surface of the sealing member facing the upper plastic member. The annular recess is arranged in a circumferential direction of the second protruding ring, and is configured to accommodate at least a portion of the second protruding ring.

In an arrangement direction from the upper plastic member to the top cover, a recess sidewall of the annular recess is inclined toward a central axis of the annular recess.

The sealing member satisfies at least one of the following conditions: the annular recess has a recess bottom surface and a recess side surface connected to the recess bottom surface in a bending manner, and a junction between the recess bottom surface and the recess side surface has an arc chamfer; or a junction between the recess side surface of the annular recess and the surface of the sealing member facing the upper plastic member has an arc chamfer.

A recess depth of the annular recess is less than a height from a surface of the second protruding ring facing away from the body to a surface of the first protruding ring facing away from the body.

A recess depth *H2* of the annular recess satisfies: 0.10mm ≤ *H*2 ≤ 0.20mm.

The terminal post includes a flange portion and a post-body portion protruding from the flange portion. The post-body portion passes through the assembly hole and the through hole. The flange portion is located on a side of the second surface. The sealing member includes a first part and a second part connected to each other. The first part abuts against both the second surface and a surface of the flange portion facing the top cover. The second part is closer to the post-body portion than the first part, and the second part abuts against the second protruding ring and abuts against a peripheral side surface of the post-body portion.

An annular recess is defined on a surface of the second part facing the upper plastic member. The annular recess is arranged in a circumferential direction of the second protruding ring, and is configured to accommodate at least a portion of the second protruding ring.

In a second aspect of the disclosure, an energy-storage apparatus is provided. The energy-storage apparatus includes an electrode assembly, a housing, and the end cover assembly according to the first aspect of the disclosure. The electrode assembly is disposed in the housing, and the end cover assembly is electrically connected to the electrode assembly.

The end cover assembly provided in the first aspect of the disclosure is applied to the energy-storage apparatus provided in the second aspect of the disclosure. The second protruding ring of the upper plastic member abuts against the sealing member, and the sealing member abuts against the peripheral side surface of the terminal post, so that the performance of connection between the sealing member and the terminal post can be improved. In this way, the sealing performance of the sealing member is enhanced, and the likelihood of liquid leakage in the energy-storage apparatus is reduced.

In a third aspect of the disclosure, an electricity-consumption device is provided. The electricity-consumption device includes a device body and the energy-storage apparatus according to the second aspect of the disclosure. The energy-storage apparatus is configured to supply power to the device body.

The energy-storage apparatus provided in the second aspect of the disclosure is applied to the electricity-consumption device provided in the third aspect of the disclosure. The second protruding ring of the upper plastic member abuts against the sealing member, and the sealing member abuts against the peripheral side surface of the terminal post, so that the performance of connection between the sealing member and the terminal post can be improved. In this way, the sealing performance of the sealing member is enhanced, and the likelihood of liquid leakage in the energy-storage apparatus is reduced. When the energy-storage apparatus supplies power to the device body, the energy-storage apparatus can provide stable power source for the device body.

### BRIEF DESCRIPTION OF THE DRAWINGS

In order to more clearly illustrate the technical solutions in embodiments of the disclosure, the accompanying drawings used in the embodiments of the disclosure are described below.
FIG. 1 is a schematic structural diagram of an energy-storage system according to an embodiment of the disclosure.
FIG. 2 is a circuit block diagram of an energy-storage system according to an embodiment of the disclosure.
FIG. 3 is a schematic structural view of an end cover assembly according to an embodiment of the disclosure.
FIG. 4 is an exploded structural view of an end cover assembly according to an embodiment of the disclosure.
FIG. 5 is a first cross-sectional view of an upper plastic member illustrated in FIG. 3 of the disclosure, taken along line A-A.
FIG. 6 is a cross-sectional view of FIG. 3 of the disclosure, taken along line A-A.
FIG. 7 is a first partial enlarged view of FIG. 6.
FIG. 8 is a second partial enlarged view of FIG. 6.
FIG. 9 is a third partial enlarged view of FIG. 6.
FIG. 10 is a second cross-sectional view of the upper plastic member illustrated in FIG. 3 of the disclosure, taken along line A-A.
FIG. 11 is a first cross-sectional view of a sealing member illustrated in FIG. 3 of the disclosure after assembly, taken along line A-A.
FIG. 12 is a first cross-sectional view of the sealing member illustrated in FIG. 3 of the disclosure before assembly, taken along line A-A.
FIG. 13 is a second cross-sectional view of the sealing member illustrated in FIG. 3 of the disclosure before assembly, taken along line A-A.
FIG. 14 is a third cross-sectional view of the sealing member illustrated in FIG. 3 of the disclosure before assembly, taken along line A-A.
FIG. 15 is a schematic structural view of an energy-storage apparatus according to an embodiment of the disclosure.
FIG. 16 is a circuit block diagram of an electricity-consumption device according to an embodiment of the disclosure.

Illustration of reference signs: energy-storage system 1, user load 11, electric energy conversion apparatus 12, electricity-consumption device 2, device body 21, energy-storage apparatus 3, housing 31, end cover assembly 4, top cover 41, first surface 411, second surface 412, assembly hole 413, upper plastic member 42, positive-electrode upper plastic member 42a, negative-electrode upper plastic member 42b, body 421, first protruding ring 422, second protruding ring 423, through hole 424, terminal post 43, positive-electrode terminal post 43a, negative-electrode terminal post 43b, flange portion 431, post-body portion 432, sealing member 44, annular recess 441, first part 442, second part 443, riveting member 45, lower plastic member 46.

### DETAILED DESCRIPTION

The following descriptions are merely preferred embodiments of the disclosure. It may be noted that, a person skilled in the art may make further modifications and improvements without departing from the spirit of the disclosure, and these modifications and improvements shall fall within the scope of the disclosure.

Due to that people's demand for energy is strongly correlated with time and space, in order to rationally utilize energy and improve the utilization rate of energy, it may need to store a type of energy via a medium or a device, or it may need to convert a type of energy into another type of energy and then store the other type of energy via a medium or a device. Stored energy may be released in a specific energy form based on future application needs. It is known that green energy sources such as photovoltaics and wind power are mainly used to generate green electricity to replace fossil fuels. At present, the generation of green electricity generally depends on photovoltaics, wind power, water potential, etc. Wind energy and solar energy generally have features such as high intermittence and significant fluctuations, and thus the power grid may not be stable, resulting in insufficient electricity during peak periods and excess electricity during off-peak periods. Unstable voltage may also cause damage to electricity. Therefore, issues like "curtailment of wind power and solar power" may arise due to insufficient electricity demand or insufficient grid integration capacity. To solve these problems, energy storage may be needed which involves converting electric energy into other type of energy by physical or chemical means and then storing the other type of energy. Stored energy may be converted into electric energy and released when needed. Simply, "energy storage" is similar to a large-scale "power bank", which refers to that electric energy is stored in the case of sufficient solar energy and wind energy, and the stored electric energy is released when needed.

Taking electrochemical energy storage as an example, an energy-storage apparatus is provided in the disclosure. The energy-storage apparatus includes a set of chemical cells. Chemical elements in the chemical cells mainly serve as an energy-storage medium, and the charging and discharging process is accompanied by chemical reaction or change of the energy storage medium, simply, the charging and discharging process involves storing in the chemical cells the electric energy generated by wind energy and solar energy, and releasing the stored electric energy for use during peak periods of electricity usage or transferring the stored electric energy to areas where electricity is in short supply.

At present, energy storage (i.e., storing energy) may be applied in various application scenarios, including generation-side energy storage (wind energy and solar energy), grid-side energy storage, base station-side energy storage, user-side energy storage, etc. Corresponding types of energy-storage apparatuses include the following.
(1) A large-scale energy-storage container applied in energy storage scenarios at the grid side is included, where the energy storage container may serve as a high-quality active and reactive regulation power source in the grid, which can realize matching of electric energy with loads in time and space, enhance the capacity for integration of renewable energy, and is of great significance in the backup of the grid system, relieving the pressure of peak power supply, and peak shaving and frequency modulation.
(2) A small and medium-sized energy-storage cabinet applied in industrial and commercial energy storage scenarios at the user side (banks, shopping malls, etc.) and a small-sized household energy storage box applied in household energy storage scenarios at the user side are included, which mainly operate in a "peak shaving and valley filling" mode. Based on the demand for electricity, there may be a significant price difference in electricity prices at peak and off-peak periods. To reduce costs, an energy storage device of a user such as an energy storage cabinet/box may be charged during off-peak periods, and the electricity in the energy storage device may be released for use during the peak periods to save electricity costs.

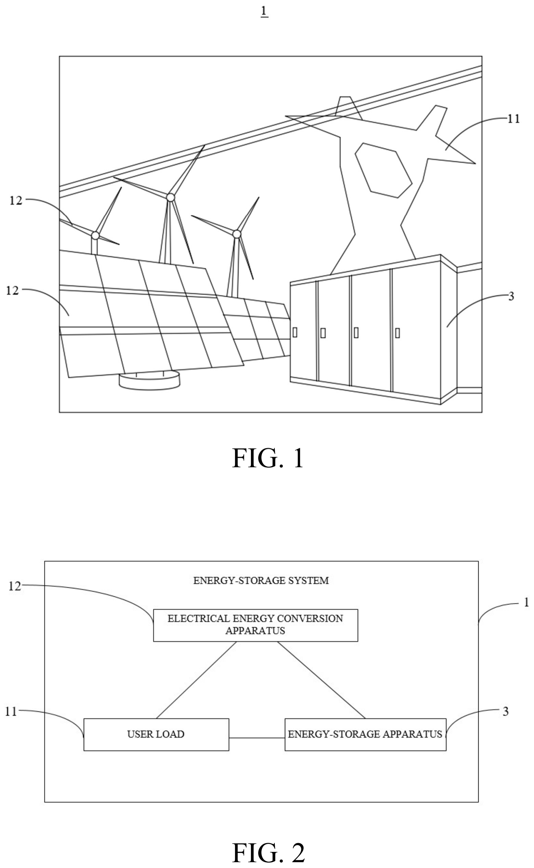

Reference is made to FIG. 1 and FIG. 2. FIG. 1 is a schematic structural diagram of an energy-storage system according to an embodiment of the disclosure. FIG. 2 is a circuit block diagram of an energy-storage system according to an embodiment of the disclosure. An energy-storage apparatus 3 provided in the embodiments of the disclosure is applied to an energy-storage system 1. The energy-storage system 1 includes a light energy conversion apparatus (photovoltaic panel), a wind energy conversion apparatus (wind turbine), a power grid, and the energy-storage apparatus 3. The energy-storage apparatus 3 may serve as an energy-storage cabinet and may be installed outdoors. Specifically, the light energy conversion apparatus and the wind energy conversion apparatus both belong to one of the types of electrical energy conversion apparatuses 12. The photovoltaic panel may convert solar energy into electrical energy during off-peak electricity hours. The energy-storage apparatus 3 is configured to store this electrical energy and supply it to the power grid during peak electricity hours or provide power when the power grid is interrupted or out of service. The wind turbine may convert wind energy into electrical energy, and the energy-storage apparatus 3 is configured to store this electrical energy and supply it to the power grid during peak electricity hours or provide power when the power grid is interrupted or out of service. The transmission of electrical energy may be carried out using high-voltage cables.

The number of the energy-storage apparatuses 3 may be multiple, and the multiple energy-storage apparatuses 3 are connected in series or parallel. The multiple energy-storage apparatuses 3 are supported and electrically connected using isolation plates (not illustrated in the drawings). In this embodiment, "multiple" refers to two or more than two. An energy-storage box may be disposed outside the energy-storage apparatus 3 to accommodate the energy-storage apparatus 3.

It may be understood that, the energy-storage apparatus 3 may include, but is not limited to, individual cells, battery modules, battery packs, battery systems, and so on. In the case where the energy-storage apparatus 3 is an individual cell, the energy-storage apparatus 3 may be at least one of cylindrical cell, prismatic cell, etc. The actual application forms of the energy-storage apparatus 3 provided in the embodiments of the disclosure may be, but are not limited to, the products listed above, and may also include other application forms. The embodiments of the disclosure do not impose strict limitations on the application forms of the energy-storage apparatus 3. In the embodiments of the disclosure, the energy-storage apparatus 3 is exemplified by a multi-cell battery.

An energy-storage system 1 is provided in the disclosure. The energy-storage system 1 includes a user load 11, an electric energy conversion apparatus 12, and an energy-storage apparatus 3. The electric energy conversion apparatus 12 is configured to convert other forms of energy into electric energy. The electric energy conversion apparatus 12 is electrically connected to the user load 11, and the electric energy converted by the electric energy conversion apparatus 12 is supplied to the user load 11. The energy-storage apparatus 3 is electrically connected to the user load 11 and the electric energy conversion apparatus 12. The energy-storage apparatus 3 stores the electric energy converted by the electric energy conversion apparatus 12, and is configured to supply power to the user load 11.

It may be understood that, in the energy-storage system 1, the electric energy conversion apparatus 12, the user load 11, and the energy-storage apparatus 3 are electrically connected to one another.

Optionally, the electric energy conversion apparatus 12 can convert at least one of solar energy, light energy, wind energy, thermal energy, tidal energy, biomass energy, and mechanical energy into electric energy, providing stable power for the user load 11 and the energy-storage apparatus 3.

Optionally, the energy-storage apparatus 3 is a small energy-storage box that may be mounted outdoor walls through wall mounting.

Optionally, the electric energy conversion apparatus 12 may be a photovoltaic panel, which can convert solar energy into electrical energy during off-peak period and store it in the energy-storage apparatus 3.

Optionally, the user load 11 may be a household user load 11 or an industrial and commercial side user load 11, etc. The energy-storage apparatus 3 is configured to store the electrical energy and supply it to street lamps and household appliances during peak period, or to supply power when the power grid is interrupted or out of service.

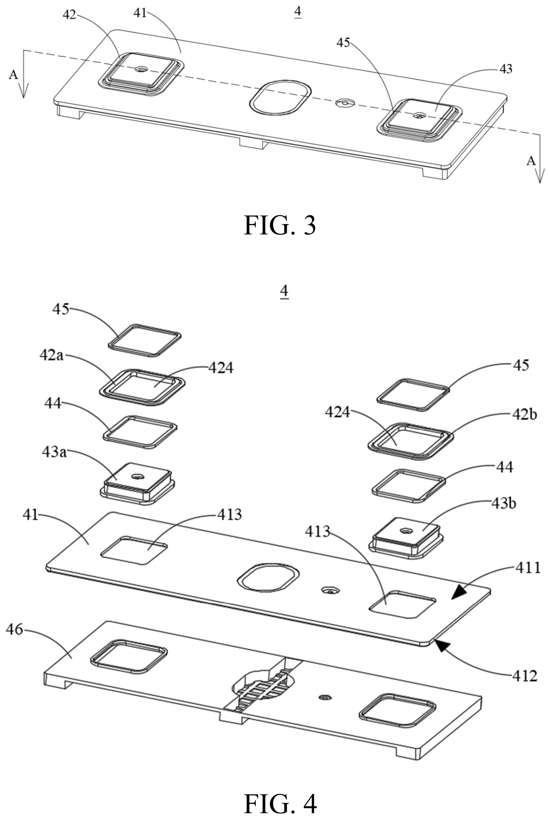

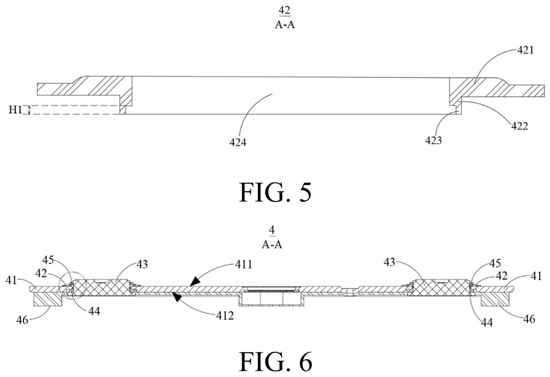

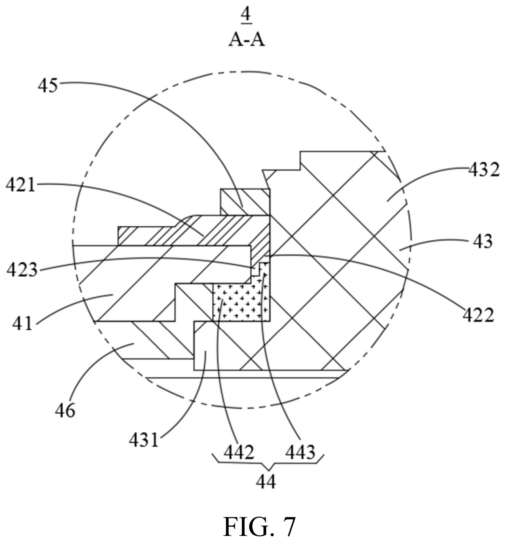

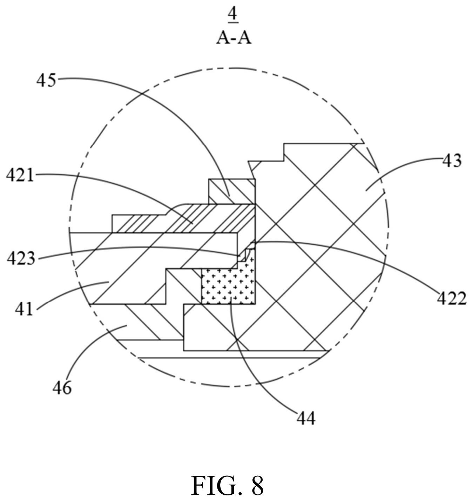

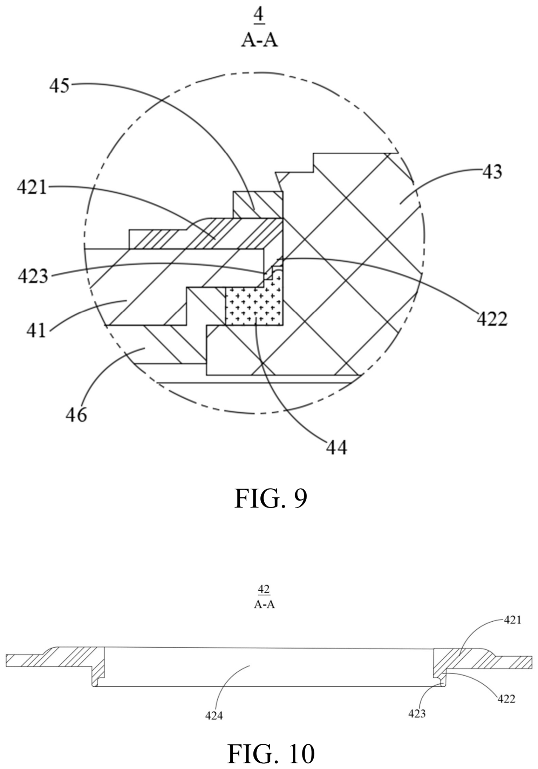

Reference is made to FIG. 3 to FIG. 9. FIG. 3 is a schematic structural view of an end cover assembly according to an embodiment of the disclosure. FIG. 4 is an exploded structural view of an end cover assembly according to an embodiment of the disclosure. FIG. 5 is a cross-sectional view of an upper plastic member illustrated in FIG. 3 of the disclosure, taken along line A-A. FIG. 6 is a cross-sectional view of FIG. 3 of the disclosure, taken along line A-A. FIG. 7 is a first partial enlarged view of FIG. 6. FIG. 8 is a second partial enlarged view of FIG. 6. FIG. 9 is a third partial enlarged view of FIG. 6.

The disclosure provides an end cover assembly 4. A second protruding ring 423 of an upper plastic member 42 can abut against a surface of a sealing member 44 facing the upper plastic member 42, to cause the sealing member 44 to abut against a peripheral side surface of a terminal post 43, thereby improving the sealing performance of the sealing member 44.

This embodiment provides an end cover assembly 4. The end cover assembly 4 includes a top cover 41, an upper plastic member 42, a terminal post 43, and a sealing member 44. The top cover 41 has a first surface 411 and a second surface 412 opposite to the first surface 411. An assembly hole 413 is defined in the top cover 41, and the assembly hole 413 penetrates through the first surface 411 and the second surface 412. The upper plastic member 42 includes a body 421, a first protruding ring 422, and a second protruding ring 423. The body 421 is disposed on the first surface 411. The first protruding ring 422 is disposed on a side of the body 421 facing the first surface 411 and located in the assembly hole 413. The second protruding ring 423 is disposed on a side of the first protruding ring 422 facing away from the body 421 and located in the assembly hole 413. A distance from an inner sidewall surface of the first protruding ring 422 to a hole wall of the assembly hole 413 is greater than a distance from an inner sidewall surface of the second protruding ring 423 to the hole wall of the assembly hole 413. The body 421, the first protruding ring 422, and the second protruding ring 423 cooperatively define a through hole 424. The terminal post 43 passes through the assembly hole 413 and the through hole 424. The sealing member 44 is sleeved on a periphery of the terminal post 43 and located in the assembly hole 413. A surface of the second protruding ring 423 facing away from the first protruding ring 422 abuts against a surface of the sealing member 44 facing the upper plastic member 42, to cause a surface of the sealing member 44 facing away from the hole wall of the assembly hole 413 to abut against the peripheral side surface of the terminal post 43.

In addition, the terms "include", "has", or any other variant thereof, are intended to cover a non-exclusive inclusion. In the specification, claims, and accompanying drawings of the disclosure, the terms "first", "second", and so on are intended to distinguish between different objects but do not indicate a particular order.

It may be noted that, in the disclosure, one component abutting against another component, for example, the sealing member 44 abutting against the terminal post 43, the upper plastic member 42 abutting against the top cover 41, etc., may be understood as one component being connected to another component. The connection method may be abutment, adhesive bonding, snap-fit, etc., which is not limited in the disclosure.

The end cover assembly 4 provided in this embodiment may be applied to the energy-storage apparatus 3. The energy-storage apparatus 3 includes an electrode assembly, a connecting sheet, a housing 31, etc. The end cover assembly 4 is connected to the housing 31, the electrode assembly is accommodated in the housing 31, and two opposite ends of the connecting sheet are electrically connected to the electrode assembly and the terminal post 43 of the end cover assembly 4, respectively. The energy-storage apparatus 3 further includes electrolyte used for wetting the electrode assembly. The end cover assembly 4 of this embodiment includes the top cover 41, the upper plastic member 42, the terminal post 43, and the sealing member 44. Optionally, the end cover assembly 4 further includes a lower plastic member 46 disposed on a side of the top cover 41 facing away from the upper plastic member 42.

The end cover assembly 4 provided in this embodiment includes the top cover 41, which is configured to fix and protect other components. The top cover 41 may be understood as a smooth aluminum sheet. The top cover 41 is usually laser-welded to the housing 31 to isolate the electrode assembly inside the housing 31. Optionally, the top cover 41 further includes an explosion-proof valve and a liquid injection hole. Optionally, the energy-storage apparatus 3 further includes a top insulating sheet disposed on the first surface 411 of the top cover 41, with the terminal post 43 passing through the top insulating sheet. The top insulating sheet is used to insulate the top cover 41 from other modules.

The end cover assembly 4 provided in this embodiment further includes the upper plastic member 42, which is configured to encase the terminal post 43. The upper plastic member 42 of this embodiment includes a body 421, a first protruding ring 422, and a second protruding ring 423 connected in sequence. The second protruding ring 423 is disposed away from an inner peripheral side surface of the first protruding ring 422. It may be understood as that an edge of the upper plastic member 42 closer to the terminal post 43 is a step defined by the first protruding ring 422 and the second protruding ring 423. Optionally, the second protruding ring 423 is closer to an outer peripheral side surface of the first protruding ring 422. Alternatively, the second protruding ring 423 is spaced apart from both the outer peripheral side surface and the inner peripheral side surface of the first protruding ring 422. It may be noted that, the upper plastic member 42 includes a positive-electrode upper plastic member 42a and a negative-electrode upper plastic member 42b. The positive-electrode upper plastic member 42a and the negative-electrode upper plastic member 42b have the same structure but are made of different materials.

Optionally, a ring width of the first protruding ring 422 is greater than a ring width of the second protruding ring 423. The ring width of the first protruding ring 422 refers to a perpendicular distance from the outer peripheral side surface of the first protruding ring 422 to the inner peripheral side surface of the first protruding ring 422. The ring width of the second protruding ring 423 refers to a perpendicular distance from an outer peripheral side surface of the second protruding ring 423 to an inner peripheral side surface of the second protruding ring 423.

Regarding the body 421, in an embodiment, the body 421 abuts against the first surface 411 and abuts against an outer peripheral sidewall of the terminal post 43. In another embodiment, the body 421 abuts against the first surface 411, the sealing member 44 is located in the through hole 424, and the sealing member 44 abuts against both the body 421 and the outer peripheral sidewall of the terminal post 43. In yet another embodiment, a side of the body 421 facing the first surface 411 abuts against the sealing member 44. Regarding the first protruding ring 422, in an embodiment, one side of the first protruding ring 422 abuts against a hole wall of the assembly hole 413, and the other side of the first protruding ring 422 abuts against the outer peripheral sidewall of the terminal post 43. In another embodiment, the first protruding ring 422 is spaced apart from the hole wall of the assembly hole 413 and/or the outer peripheral sidewall of the terminal post 43. Optionally, the sealing member 44 is disposed in this gap. In yet another embodiment, a surface of the first protruding ring 422 facing away from the body 421 abuts against the sealing member 44. Regarding the second protruding ring 423, in an embodiment, one side of the second protruding ring 423 abuts against the hole wall of the assembly hole 413, and the other side of the second protruding ring 423 abuts against the sealing member 44. In another embodiment, the second protruding ring 423 is spaced apart from the hole wall of the assembly hole 413 and/or the outer peripheral sidewall of the terminal post 43. Optionally, the sealing member 44 is disposed in this gap.

The end cover assembly 4 provided in this embodiment further includes the terminal post 43, which is configured to connect the connecting sheet to draw out current. The terminal post 43 sequentially passes through the lower plastic member 46, the top cover 41, the upper plastic member 42, and a riveting member 45. The terminal post 43 is insulated from the upper plastic member 42 and the lower plastic member 46. Optionally, the terminal post 43 includes a positive terminal post 43a and a negative terminal post 43b. The positive terminal post 43a corresponds to the positive-electrode upper plastic member 42a, and the negative terminal post 43b corresponds to the negative-electrode upper plastic member 42b. The positive terminal post 43a and the negative terminal post 43b have the same structure but are made of different materials. The positive terminal post 43a is made of aluminum, and the negative terminal post 43b is made of a copper-aluminum composite plate.

The end cover assembly 4 provided in this embodiment further includes the sealing member 44, which is configured to isolate the top cover 41 from the terminal post 43 to achieve sealing of the terminal post 43. The sealing member 44 may be understood as a sealing ring. The sealing member 44 is sleeved on the terminal post 43 and is located in the assembly hole 413. Optionally, the sealing member 44 abuts against the upper plastic member 42, the top cover 41, the lower plastic member 46, and the terminal post 43. The sealing member 44 is made of an elastic material. When subjected to a compressive force, the sealing member 44 can deform.

The second protruding ring 423 of the upper plastic member 42 abuts against the surface of the sealing member 44 facing the upper plastic member 42, to cause the surface of the sealing member 44 facing away from the hole wall of the assembly hole 413 to abut against the peripheral side surface of the terminal post 43. It may be understood as that the second protruding ring 423 can compress the sealing member 44 in an axial direction of the terminal post 43, applying a compressive force to the sealing member 44 in the axial direction of the terminal post 43, so that the sealing member 44 deforms in a radial direction of the terminal post 43 to abut against and seal the peripheral side surface of the terminal post 43. In other words, the second protruding ring 423 compresses the sealing member 44 in an axial direction of the sealing member 44, causing the sealing member 44 to be compressed and deformed, and to extend outward in a radial direction of the sealing member 44 to abut against and seal the peripheral side surface of the terminal post 43.

Furthermore, the distance from the inner sidewall surface of the first protruding ring 422 to the hole wall of the assembly hole 413 is greater than the distance from the inner sidewall surface of the second protruding ring 423 to the hole wall of the assembly hole 413. In other words, there is a gap between the surface of the second protruding ring 423 facing away from the hole wall of the assembly hole 413 and the surface of the first protruding ring 422 facing away from the hole wall of the assembly hole. Therefore, there is a gap between the terminal post 43 and the second protruding ring 423 located in the assembly hole 413. When the second protruding ring 423 compresses the sealing member 44, at least a portion of the sealing member 44 may be located between the second protruding ring 423 and the terminal post 43, abutting against and sealing the peripheral side surface of the terminal post 43.

Therefore, in the end cover assembly 4 of this embodiment, the second protruding ring 423 of the upper plastic member 42 abuts against the sealing member 44, and the sealing member 44 abuts against the peripheral side surface of the terminal post 43, so that the performance of connection between the sealing member 44 and the terminal post 43 can be improved. In this way, the sealing performance of the sealing member 44 is enhanced, and thus the likelihood of liquid leakage in the end cover assembly 4 is reduced, and the likelihood of liquid leakage in the energy-storage apparatus 3 is reduced.

Reference is made to FIG. 7 and FIG. 8. In an embodiment, the first protruding ring 422 has a third surface facing the second protruding ring 423. The sealing member 44 abuts against the third surface located between the second protruding ring 423 and the terminal post 43.

For example, at least a portion of the sealing member 44 is located between the second protruding ring 423 and the terminal post 43, the sealing member 44 abuts against the surface of the first protruding ring 422 facing away from the body 421, and the sealing member 44 abuts against the peripheral side surface of the terminal post 43. For another example, at least a portion of the sealing member 44 is located between the second protruding ring 423 and the terminal post 43, the sealing member 44 abuts against the surface of the second protruding ring 423 facing the terminal post 43, and the sealing member 44 abuts against the peripheral side surface of the terminal post 43. For yet another example, at least a portion of the sealing member 44 is located between the second protruding ring 423 and the terminal post 43, the sealing member 44 abuts against the surface of the first protruding ring 422 facing away from the body 421, the surface of the second protruding ring 423 facing the terminal post 43, and the peripheral side surface of the terminal post 43.

In this embodiment, the sealing member 44 is disposed in a gap between the second protruding ring 423 and the terminal post 43, and the sealing member 44 abuts against the surface of the first protruding ring 422, the surface of the second protruding ring 423, and the surface of the terminal post 43 in the gap. This design increases contact areas between the sealing member 44 and the upper plastic member 42 and between the sealing member 44 and the terminal post 43. In this way, an electrolyte leakage path is extended into a tortuous, multi-stage stepped path, thereby further improving the sealing performance of the sealing member 44, and thus reducing the likelihood of liquid leakage in the end cover assembly 4, and reducing the likelihood of liquid leakage in the energy-storage apparatus 3.

Optionally, when there is a gap between a surface of the second protruding ring 423 closer to the hole wall of the assembly hole 413 and a surface of the first protruding ring 422 closer to the hole wall of the assembly hole 413, at least a portion of the sealing member 44 located between the second protruding ring 423 and the hole wall of the assembly hole 413 abuts against the hole wall of the assembly hole 413; and/or, at least a portion of the sealing member 44 located between the second protruding ring 423 and the hole wall of the assembly hole 413 abuts against the surface of the first protruding ring 422 facing away from the body 421 and located between the second protruding ring 423 and the hole wall of the assembly hole 413; and/or, at least a portion of the sealing member 44 located between the second protruding ring 423 and the hole wall of the assembly hole 413 abuts against the surface of the second protruding ring 423 closer to the hole wall of the assembly hole 413.

In this embodiment, the sealing member 44 is disposed in the gap between the second protruding ring 423 and the hole wall of the assembly hole 413, and abuts against the surface of the assembly hole wall, the surface of the first protruding ring 422, and the surface of the second protruding ring 423 in the gap. Consequently, the performance of connection between the sealing member 44 and the upper plastic member 42 and between the sealing member 44 and the top cover 41 are improved. In this way, the sealing performance of the sealing member 44 is enhanced, and thus the likelihood of liquid leakage in the end cover assembly 4 is reduced, and the likelihood of liquid leakage in the energy-storage apparatus 3 is reduced.

Reference is made to FIG. 5 to FIG. 9. In an embodiment, the surface of the second protruding ring 423 closer to the hole wall of the assembly hole 413 is flush with the surface of the first protruding ring 422 closer to the hole wall of the assembly hole 413.

The surface of the second protruding ring 423 facing away from the terminal post 43 is flush with the surface of the first protruding ring 422 facing away from the terminal post 43. In other words, in a radial direction of the upper plastic member 42, the outer peripheral side surface of the first protruding ring 422 is flush with the outer peripheral side surface of the second protruding ring 423. When the upper plastic member 42 is located in the assembly hole 413, both the outer peripheral side surface of the first protruding ring 422 and the outer peripheral side surface of the second protruding ring 423 can abut against the hole wall of the assembly hole 413. Alternatively, both the outer peripheral side surface of the first protruding ring 422 and the outer peripheral side surface of the second protruding ring 423 can abut against the sealing member 44, and the sealing member 44 abuts against the hole wall of the assembly hole 413.

In the case where both the outer peripheral side surface of the first protruding ring 422 and the outer peripheral side surface of the second protruding ring 423 abut against the hole wall of the assembly hole 413, the outer peripheral side surface of the first protruding ring 422 is flush with the outer peripheral side surface of the second protruding ring 423, and the gap between the first protruding ring 422 and the second protruding ring 423 is reduced, so that the first protruding ring 422 and the second protruding ring 423 tightly abut against the hole wall of the assembly hole 413, thereby improving the performance of connection between the upper plastic member 42 and the top cover 41. In this way, the sealing performance of the end cover assembly 4 is enhanced, and thus the likelihood of liquid leakage in the end cover assembly 4 is reduced, and the likelihood of liquid leakage in the energy-storage apparatus 3 is reduced.

Optionally, the end cover assembly 4 further includes a riveting member 45. The riveting member 45 is mounted on a side of the body 421 facing away from the first protruding ring 422, and the riveting member 45 is sleeved on and connected to the terminal post 43.

When the riveting member 45 is pressed downward, the first protruding ring 422 and the second protruding ring 423 are compressed by the riveting member 45 and the sealing member 44. Since the hardness of the sealing member 44 is lower than the hardness of the upper plastic member 42 and the riveting member 45, the sealing member 44 deforms first and fills up the gap between the first protruding ring 422 and the second protruding ring 423. Subsequently, the sealing member 44 continues to deform until a rebound force of the sealing member 44 exceeds the hardness limit of the upper plastic member 42, causing the upper plastic member 42 to deform slightly and bulge sideways in a direction perpendicular to the pressing direction. The outer peripheral side surface of the first protruding ring 422 being flush with the outer peripheral side surface of the second protruding ring 423 can ensure that the first protruding ring 422 deforms slightly to fill up a gap between the top cover 41 and the terminal post 43. In this way, extra seal is added, thereby further improving the sealing performance of the end cover assembly 4 and enhancing the safety and service life of the energy-storage apparatus 3.

In the case where both the outer peripheral side surface of the first protruding ring 422 and the outer peripheral side surface of the second protruding ring 423 abut against the sealing member 44, the outer peripheral side surface of the first protruding ring 422 is flush with the outer peripheral side surface of the second protruding ring 423, and the gap between the first protruding ring 422 and the second protruding ring 423 is reduced, so that the sealing member 44 may abut against and seal the upper plastic member 42 more easily, thereby improving the performance of connection between the sealing member 44 and the first protruding ring 422 and between the sealing member 44 and the second protruding ring 423. In this way, the performance of connection between the sealing member 44 and the upper plastic member 42 is enhanced, and thus the likelihood of liquid leakage in the end cover assembly 4 is reduced, and the likelihood of liquid leakage in the energy-storage apparatus 3 is reduced.

Reference is made to FIG. 6 to FIG. 9. In an embodiment, a surface of the second protruding ring 423 facing away from the first protruding ring 422 is closer to the first surface 411 than the second surface 412.

The second protruding ring 423 is located in the assembly hole 413 of the top cover 41 and does not pass through the assembly hole 413. Furthermore, there is a gap between the second surface 412 and the surface of the second protruding ring 423 facing away from the first protruding ring 422. Since the surface of the second protruding ring 423 facing away from the first protruding ring 422 is closer to the first surface 411 than the second surface 412, and the surface of the second protruding ring 423 facing away from the first protruding ring 422 abuts against a portion of the sealing member 44, both the second protruding ring 423 and the portion of the sealing member 44 abutting against the surface of the second protruding ring 423 facing away from the first protruding ring 422 are located in the assembly hole 413. This is conducive to improving the performance of connection between the sealing member 44 and the upper plastic member 42 and between the sealing member 44 and the top cover 41, thereby reducing the likelihood of liquid leakage in the end cover assembly 4 and reducing the likelihood of liquid leakage in the energy-storage apparatus 3.

Specifically, since the top cover 41 and the terminal post 43 are generally made of metal, subtle undulating marks due to cutting may be left on surfaces of the top cover 41 and the terminal post 43 after machining. In this embodiment, the surface of the second protruding ring 423 facing away from the first protruding ring 422 is closer to the first surface 411 than the second surface 412, so that the sealing member 44 is provided with greater deformation space, which allows the sealing member 44 to fully conform to the subtly undulating surfaces after being compressed, achieving a better sealing effect.

Optionally, the surface of the second protruding ring 423 facing away from the terminal post 43 abuts against the hole wall of the assembly hole 413. For the portion of the sealing member 44 abutting against the surface of the second protruding ring 423 facing away from the first protruding ring 422, a surface facing away from the terminal post 43 abuts against the hole wall of the assembly hole 413.

Reference is made to FIG. 10, which is a second cross-sectional view of the upper plastic member illustrated in FIG. 3 of the disclosure, taken along line A-A. In an embodiment, the upper plastic member 42 satisfies at least one of the following conditions: a surface junction between the second protruding ring 423 and the first protruding ring 422 has an arc chamfer; and/or, the second protruding ring 423 has a top surface facing away from the first protruding ring 422 and a side surface connected to the top surface in a bending manner, where the side surface is further connected to the first protruding ring 422, and a junction between the top surface and the side surface has an arc chamfer.

Optionally, the arc chamfer includes either a protrusion or a recess. Optionally, the arc chamfer at the surface junction between the second protruding ring 423 and the first protruding ring 422 is a recess. Optionally, in the second protruding ring 423, the arc chamfer at the junction between the top surface and the side surface is a protrusion.

In this embodiment, the surface junction between the second protruding ring 423 and the first protruding ring 422 has an arc chamfer, and/or the junction between the top surface and the side surface has an arc chamfer. On one hand, this configuration increases the contact area between the second protruding ring 423 and the sealing member 44, thereby improving the performance of connection between the upper plastic member 42 and the sealing member 44, and reducing the likelihood of liquid leakage in the end cover assembly 4. On the other hand, during the assembly of the upper plastic member 42 and the sealing member 44, this configuration reduces the likelihood of, or even prevents, the upper plastic member 42 from scratching the sealing member 44. In this way, the sealing performance of the sealing member 44 is ensured, the service life of the sealing member 44 is prolonged, the likelihood of liquid leakage in the end cover assembly 4 is reduced, and the safety performance of the end cover assembly 4 is improved.

Reference is made to FIG. 5. In an embodiment, a height *H*1 from a surface of the second protruding ring 423 facing away from the body 421 to a surface of the first protruding ring 422 facing away from the body 421 satisfies: 0.20mm ≤ *H*1 ≤ 0.30mm.

Specifically, the value of the height *H*1 may be, but is not limited to, 0.20mm, 0.21mm, 0.22mm, 0.23mm, 0.24mm, 0.25mm, 0.26mm, 0.27mm, 0.28mm, 0.29mm, 0.30mm, etc.

In this embodiment, when the height *H*1 satisfies 0.20mm ≤ *H*1 ≤ 0.30mm, it may ensure that the second protruding ring 423 sufficiently compresses the sealing member 44, causing the surface of the sealing member 44 facing away from the hole wall of the assembly hole 413 to abut against and seal the peripheral side surface of the terminal post 43. Furthermore, it may ensure a tight fit between the second protruding ring 423 and the sealing member 44 without damaging the sealing member 44. If the value of *H*1 is too small, it would adversely affect the compression on the sealing member 44 by the second protruding ring 423, resulting in insufficient deformation of the sealing member 44 and making it difficult for the surface of the sealing member 44 facing away from the hole wall of the assembly hole 413 to abut against and seal the peripheral side surface of the terminal post 43. If the value of *H*1 is too large, it would cause the second protruding ring 423 to easily extrude the sealing member 44 out of the assembly hole 413, or even puncture the sealing member 44, thereby degrading the sealing performance of the sealing member 44 and leading to a higher likelihood of liquid leakage in the end cover assembly 4.

Reference is made to FIG. 3, FIG. 4, and FIG. 6 to FIG. 9. In an embodiment, the end cover assembly 4 further includes a riveting member 45. The riveting member 45 is mounted on the side of the body 421 facing away from the first protruding ring 422. The riveting member 45 is sleeved on and connected to the terminal post 43. An orthographic projection of the riveting member 45 on the body 421 facing the first surface 411 covers both an orthographic projection of the first protruding ring 422 on the body 421 facing the first surface 411 and an orthographic projection of the second protruding ring 423 on the body 421 facing the first surface 411.

The end cover assembly 4 provided in this embodiment further includes the riveting member 45, which is configured to connect the terminal post 43. The riveting member 45 is connected to the terminal post 43 via a riveting process. The riveting member 45 is disposed on the side of the body 421 facing away from the first protruding ring 422. In other words, the riveting member 45 is disposed on a side of the body 421 facing away from the first surface 411. In this embodiment, the orthographic projection of the riveting member 45 on the body 421 covers the orthographic projection of the first protruding ring 422 on the body 421 and the orthographic projection of the second protruding ring 423 on the body 421. In other words, the riveting member 45 is arranged corresponding to the first protruding ring 422 and the second protruding ring 423, and a ring width of the riveting member 45 is greater than a ring width of the first protruding ring 422 and a ring width of the second protruding ring 423. This configuration allows the riveting member 45 to apply a compressive force to the first protruding ring 422 and the second protruding ring 423 in the axial direction of the terminal post 43. In other words, the riveting member 45 can apply a compressive force to the upper plastic member 42 in the axial direction of the terminal post 43. In this way, the performance of connection between the upper plastic member and the sealing member 44 is further enhanced, and thus the likelihood of liquid leakage in the end cover assembly 4 is reduced, and the likelihood of liquid leakage in the energy-storage apparatus 3 is reduced.

Optionally, the body 421 includes a third part and a fourth part connected to each other. The fourth part is closer to the terminal post 43 than the third part, and the riveting member 45 is mounted to the fourth part. In a thickness direction of the upper plastic member 42, a thickness of the fourth part is greater than a thickness of the third part. In a width direction of the upper plastic member 42, a width of the fourth part is greater than a width of the riveting member 45.

The fourth part may be understood as an inner ring of the body 421, and the third part may be understood as an outer ring of the body 421. The inner ring of the body 421 has a greater thickness, while the outer ring of the body 421 has a smaller thickness. Furthermore, a width of the inner ring of the body 421 is greater than a width of the riveting member 45 after the riveting member 45 is sleeved on the terminal post 43. This configuration enables the riveting member 45 to press against the body 421 over a larger contact area. Furthermore, the components protruding from the first surface 411 of the top cover 41 form a stepwise tapered shape that widens progressively from top to bottom. This design facilitates the subsequent attachment of the top insulating sheet, allowing the top insulating sheet to be conveniently sleeved on from top surfaces of the terminal posts 43 at both ends and adjusted layer by layer for positioning. In this way, excessive height differences between component layers protruding from the first surface 411 of the top cover 41 may be avoided, thereby avoiding interference or jamming during the placement of the top insulating sheet. Moreover, the peripheral edge of the body 421 may be prevented from warping due to riveting pressure, which could adversely affect the subsequent process of attaching the top insulating sheet to the first surface 411 of the top cover 41.

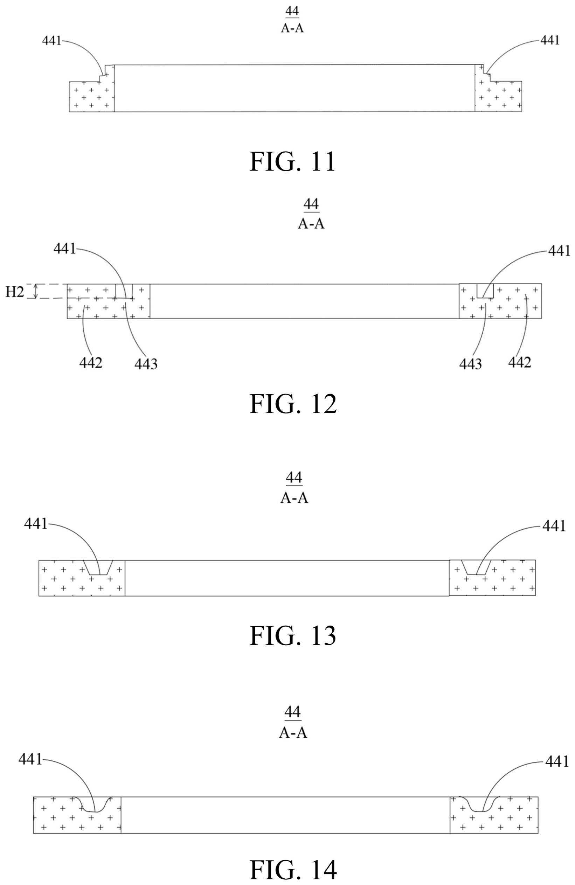

Reference is made to FIG. 11 and FIG. 12. FIG. 11 is a first cross-sectional view of a sealing member illustrated in FIG. 3 of the disclosure after assembly, taken along line A-A. FIG. 12 is a first cross-sectional view of the sealing member illustrated in FIG. 3 of the disclosure before assembly, taken along line A-A. It may be noted that, the sealing member 44 in FIG. 11 is a sealing member 44 after assembly, which deforms due to compression by various components. The sealing member 44 in FIG. 12 is a sealing member 44 before assembly, which is not yet compressed by various components and does not deform.

In an embodiment, an annular recess 441 is defined on a surface of the sealing member 44 facing the upper plastic member 42. The annular recess 441 is arranged in a circumferential direction of the second protruding ring 423, and is configured to accommodate at least a portion of the second protruding ring 423.

The sealing member 44 provided in this embodiment has the annular recess 441 for accommodating at least a portion of the second protruding ring 423. For example, a portion of the second protruding ring 423 is located in the annular recess 441. For another example, the entire second protruding ring 423 is located in the annular recess 441. The second protruding ring 423 abuts against a bottom wall of the annular recess 441, and/or the second protruding ring 423 abuts against a sidewall of the annular recess 441. Optionally, there is a gap between a recess sidewall of the annular recess 441 closer to the terminal post 43 and a surface of the sealing member 44 closer to the terminal post 43. This configuration is conducive to allowing the sealing member 44, after being compressed by the second protruding ring 423, to extend outward in the radial direction of the sealing member 44, thereby abutting against and sealing the peripheral side surface of the terminal post 43.

In this embodiment, the annular recess 441 is defined on the sealing member 44, so that the second protruding ring 423 may be disposed in the annular recess 441. On one hand, it facilitates better fitting between the second protruding ring 423 and the sealing member 44. When the second protruding ring 423 compresses the sealing member 44, the sealing member 44 extends outward in the radial direction of the sealing member 44 more easily to abut against and seal the peripheral side surface of the terminal post 43. In this way, the performance of connection between the sealing member 44 and the terminal post 43 is enhanced, the sealing performance of the sealing member 44 is enhanced, and thus the likelihood of liquid leakage in the end cover assembly 4 is reduced, and the likelihood of liquid leakage in the energy-storage apparatus 3 is reduced. On the other hand, during the assembly of the upper plastic member 42 and the sealing member 44, the annular recess 441 on the sealing member 44 facilitates the positioning of the second protruding ring 423, thereby reducing the operational difficulty of assembly and improving the assembly accuracy between the upper plastic member 42 and the sealing member 44.

Reference is made to FIG. 13, which is a second cross-sectional view of the sealing member illustrated in FIG. 3 of the disclosure before assembly, taken along line A-A. In an embodiment, in an arrangement direction from the upper plastic member 42 to the top cover 41, the recess sidewall of the annular recess 441 is inclined toward a central axis of the annular recess 441.

It may be understood as that, the recess sidewall of the annular recess 441 is an inclined surface that tilts toward the central axis of the annular recess 441. In other words, in the arrangement direction from the upper plastic member 42 to the top cover 41, a recess width of the annular recess 441 gradually decreases. Optionally, the shape of the annular recess 441 resembles an inverted trapezoid that is wider at the top and narrower at the bottom. On one hand, this configuration allows the recess sidewall of the annular recess 441 to guide the second protruding ring 423, reducing the difficulty in assembly of the upper plastic member 42 and the sealing member 44. In other words, the recess sidewall of the annular recess 441 serves as a guiding inclined surface. On the other hand, this configuration is conducive to allowing the sealing member 44, after being compressed, to more easily extend outward in the radial direction of the sealing member 44 to better abut against and seal the peripheral side surface of the terminal post 43. In this way, the sealing performance of the sealing member 44 is enhanced, and thus the likelihood of liquid leakage in the end cover assembly 4 is reduced, and the likelihood of liquid leakage in the energy-storage apparatus 3 is reduced.

Reference is made to FIG. 14, which is a third cross-sectional view of the sealing member illustrated in FIG. 3 of the disclosure before assembly, taken along line A-A. In an embodiment, the sealing member 44 satisfies at least one of the following conditions: the annular recess 441 has a recess bottom surface and a recess side surface connected to the recess bottom surface in a bending manner, and a junction between the recess bottom surface and the recess side surface has an arc chamfer; and/or a junction between the recess side surface of the annular recess 441 and the surface of the sealing member 44 facing the upper plastic member 42 has an arc chamfer.

Optionally, the arc chamfer includes either a protrusion or a recess. Optionally, the arc chamfer at the junction between the recess bottom surface and the recess side surface is a recess. Optionally, the arc chamfer at the junction between the recess side surface of the annular recess 441 and the surface of the sealing member 44 facing the upper plastic member 42 is a protrusion.

In this embodiment, the junction between the recess bottom surface and the recess side surface has an arc chamfer, and/or the junction between the recess side surface of the annular recess 441 and the surface of the sealing member 44 facing the upper plastic member 42 has an arc chamfer. On one hand, this configuration increases the contact area between the second protruding ring 423 and the sealing member 44, thereby improving the performance of connection between the upper plastic member 42 and the sealing member 44, and reducing the likelihood of liquid leakage in the end cover assembly 4. On the other hand, during the assembly of the upper plastic member 42 and the sealing member 44, this configuration reduces the likelihood of, or even prevents, the upper plastic member 42 from scratching the sealing member 44. In this way, the sealing performance of the sealing member 44 is ensured, the service life of the sealing member 44 is prolonged, the likelihood of liquid leakage in the end cover assembly 4 is reduced, and the safety performance of the end cover assembly 4 is improved.

Optionally, in the case where the surface junction between the second protruding ring 423 and the first protruding ring 422 has a first arc chamfer, and the junction between the recess side surface of the annular recess 441 and the surface of the sealing member 44 facing the upper plastic member 42 has a second arc chamfer, one of the first arc chamfer and the second arc chamfer is a protrusion, and the other of the first arc chamfer and the second arc chamfer is a recess.

Optionally, the second protruding ring 423 has the top surface facing away from the first protruding ring 422 and the side surface connected to the top surface in a bending manner, the side surface is further connected to the first protruding ring 422, and the junction between the top surface and the side surface has a third arc chamfer; and the annular recess 441 has the recess bottom surface and the recess side surface connected to the recess bottom surface in a bending manner, and the junction between the recess bottom surface and the recess side surface has a fourth arc chamfer, where one of the third arc chamfer and the fourth arc chamfer is a protrusion, and the other of the third arc chamfer and the fourth arc chamfer is a recess.

In this embodiment, the first arc chamfer and the second arc chamfer are engaged in a concave-convex fitting manner, and/or the third arc chamfer and the fourth arc chamfer are engaged in a concave-convex fitting manner. On one hand, during the assembly of the upper plastic member 42 and the sealing member 44, this configuration reduces the likelihood of, or even prevents, the upper plastic member 42 from scratching the sealing member 44. On the other hand, the second protruding ring 423 is more tightly connected to the annular recess 441, further improving the performance of connection between the second protruding ring 423 and the annular recess 41, and reducing the likelihood of liquid leakage in the end cover assembly 4.

In an embodiment, a recess depth of the annular recess 441 is less than a height from a surface of the second protruding ring 423 facing away from the body 421 to a surface of the first protruding ring 422 facing away from the body 421.

The height of the second protruding ring 423 is greater than or equal to the recess depth of the annular recess 441. The height of the second protruding ring 423 refers to a height from the surface of the second protruding ring 423 facing away from the body 421 to the surface of the first protruding ring 422 facing away from the body 421. The recess depth of the annular recess 441 refers to a perpendicular distance between the recess bottom surface of the annular recess 441 and the surface of the sealing member 44 facing the upper plastic member 42. In the embodiment, by defining the height of the second protruding ring 423 and the recess depth of the annular recess 441, a portion of the second protruding ring 423 can be disposed in the annular recess 441. This configuration facilitates the compression of the sealing member 44 by the second protruding ring 423. As a result, the sealing member 44 deforms more readily and extends outward in the radial direction of the sealing member 44 to better abut against and seal the peripheral side surface of the terminal post 43. In this way, the sealing performance of the sealing member 44 is enhanced, and thus the likelihood of liquid leakage in the end cover assembly 4 is reduced, and the likelihood of liquid leakage in the energy-storage apparatus 3 is reduced.

Reference is made to FIG. 12. In an embodiment, a recess depth *H*2 of the annular recess 441 satisfies: 0.10mm ≤ *H*2 ≤ 0.20mm.

Specifically, the value of the recess depth *H*2 may be, but is not limited to, 0.10mm, 0.11mm, 0.12mm, 0.13mm, 0.14mm, 0.15mm, 0.16mm, 0.17mm, 0.18mm, 0.19mm, 0.20mm, etc.

In this embodiment, when the recess depth *H2* satisfies 0.10mm ≤ *H*2 ≤ 0.20mm, it may ensure that the second protruding ring 423 can sufficiently compress the sealing member 44, causing the surface of the sealing member 44 facing away from the hole wall of the assembly hole 413 to abut against and seal the peripheral side surface of the terminal post 43. Furthermore, it may facilitate the assembly and positioning of the second protruding ring 423 and the sealing member 44, reducing assembly difficulty. If the value of *H*2 is too small, it would adversely affect the fitting between the sealing member 44 and the second protruding ring 423 and adversely affect the assembly and positioning of the annular recess 441 and the second protruding ring 423. If the value of *H*2 is too large, it would make it difficult for the second protruding ring 423 to compress the sealing member 44, resulting in insufficient deformation of the sealing member 44 and making it difficult for the surface of the sealing member 44 facing away from the hole wall of the assembly hole 413 to abut against and seal the peripheral side surface of the terminal post 43, thereby degrading the sealing performance of the sealing member 44.

Reference is made to FIG. 6. In an embodiment, the terminal post 43 includes a flange portion 431 and a post-body portion 432 protruding from the flange portion 431. The post-body portion 432 passes through the assembly hole 413 and the through hole 424. The flange portion 431 is located on a side of the second surface 412. The sealing member 44 includes a first part 442 and a second part 443 connected to each other. The first part 442 abuts against both the second surface 412 and a surface of the flange portion 431 facing the top cover 41. The second part 443 is closer to the post-body portion 432 than the first part 442. The second part 443 abuts against the second protruding ring 423 and abuts against a peripheral side surface of the post-body portion 432.

After the end cover assembly 4 is assembled, the first part 442 and the second part 443 are arranged at an angle. In other words, when viewed in a cross-section of the sealing member 44 after assembly, the sealing member 44 has a roughly L-shape. One part of the sealing member 44 is placed between the top cover 41 and the flange portion 431, and the other part of the sealing member 44 not compressed by the top cover 41 wraps around the periphery of the post-body portion 432. The first part 442 may be understood as a part of the sealing member 44 compressed by the top cover 41, and the second part 443 may be understood as a part of the sealing member 44 not compressed by the top cover 41. Optionally, the first part 442 abuts against the lower plastic member 46. The second part 443 abuts against the hole wall of the assembly hole 413, the first protruding ring 422, the second protruding ring 423, a portion of the flange portion 431, and the peripheral side surface of the post-body portion 432.

The sealing member 44 in this embodiment includes the first part 442 and the second part 443. The first part 442 is disposed between the top cover 41 and the flange portion 431. The second part 443 may fit with the second protruding ring 423 and abut against the peripheral side surface of the post-body portion 432. This configuration is conducive to improving the performance of connection between the sealing member 44 and the upper plastic member 42, between the sealing member 44 and the top cover 41, between the sealing member 44 and the flange portion 431, and between the sealing member 44 and the post-body portion 432. In this way, the performance of connection of the sealing member 44 is further enhanced, and thus the likelihood of liquid leakage in the end cover assembly 4 is reduced, and the likelihood of liquid leakage in the energy-storage apparatus 3 is reduced.

Reference is made to FIG. 11. In an embodiment, an annular recess 441 is defined on a surface of the second part 443 facing the upper plastic member 42. The annular recess 441 is arranged in a circumferential direction of the second protruding ring 423, and is configured to accommodate at least a portion of the second protruding ring 423.

The annular recess 441 for the upper plastic member 42 is defined on the second part 443 of the sealing member 44, to facilitate the mutual fitting between the second protruding ring 423 and the second part 443 of the sealing member 44. In this way, when the second protruding ring 423 compresses the sealing member 44, the sealing member 44 may extend outward more easily in the radial direction of the sealing member 44 to abut against and seal the peripheral side surface of the terminal post 43. Moreover, during the assembly of the upper plastic member 42 and the sealing member 44, the annular recess 441 on the sealing member 44 facilitates the positioning of the second protruding ring 423, thereby reducing the operational difficulty of assembly and improving the assembly accuracy between the upper plastic member 42 and the sealing member 44.

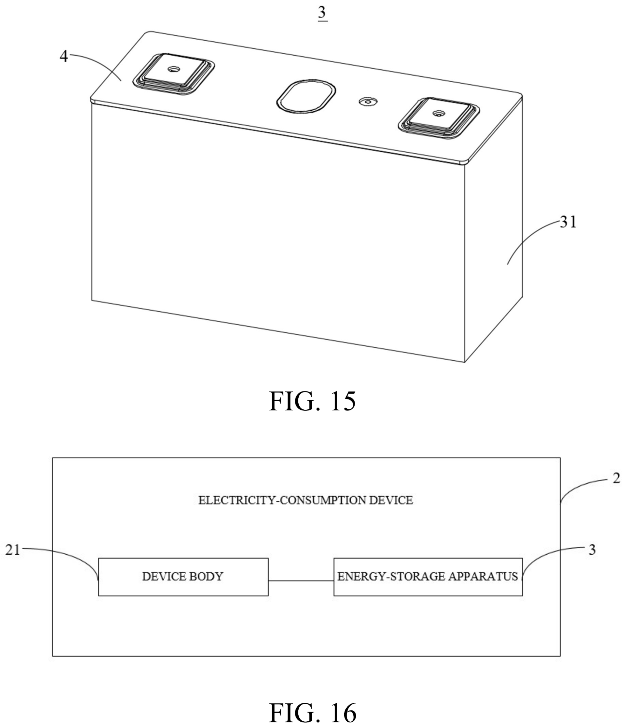

Reference is made to FIG. 15, which is a schematic structural view of an energy-storage apparatus according to an embodiment of the disclosure. It may be noted that, an electrode assembly is not illustrated in the drawings. The disclosure further provides an energy-storage apparatus 3. The energy-storage apparatus 3 includes an electrode assembly, a housing 31, and the end cover assembly 4 as provided above in the disclosure. The electrode assembly is disposed in the housing 31, and the end cover assembly 4 is electrically connected to the electrode assembly.

Optionally, the energy-storage apparatus 3 may be, but is not limited to, a lithium-ion secondary battery, a lithium-ion primary battery, a lithium-sulfur battery, a sodium-lithium-ion battery, a sodium-ion battery, a magnesium-ion battery, or the like.

The end cover assembly 4 provided above in the disclosure is applied to the energy-storage apparatus 3. The second protruding ring 423 of the upper plastic member 42 abuts against the sealing member 44, and the sealing member 44 abuts against the peripheral side surface of the terminal post 43, so that the performance of connection between the sealing member 44 and the terminal post 43 can be improved. In this way, the sealing performance of the sealing member 44 is enhanced, and the likelihood of liquid leakage in the energy-storage apparatus 3 is reduced.

Reference is made to FIG. 16, which is a circuit block diagram of an electricity-consumption device according to an embodiment of the disclosure. The disclosure also provides an electricity-consumption device 2. The electricity-consumption device 2 includes a device body 21 and the energy-storage apparatus 3 as provided above in the disclosure. The energy-storage apparatus 3 is configured to supply power to the device body 21.

Optionally, the electricity-consumption device 2 in the embodiments of the disclosure may be, but is not limited to, portable electronic devices such as mobile phones, tablet computers, laptop computers, desktop computers, smart toys, smart bracelets, smart watches, e-readers, gaming consoles, toys, etc. The electricity-consumption device 2 may be large-scale equipment such as energy storage battery cabinets, electric bicycles, electric vehicles, ships, spacecraft, etc.

It may be understood that, the electricity-consumption device 2 described in this embodiment is merely a form of electricity-consumption device 2 to which the energy-storage apparatus 3 is applied. It should not be construed as limiting the electricity-consumption device 2 provided in the disclosure, nor should it be construed as limiting the batteries provided in various embodiments of the disclosure.

The energy-storage apparatus 3 provided above in the disclosure is applied to the electricity-consumption device 2 provided in this embodiment. The second protruding ring 423 of the upper plastic member 42 abuts against the sealing member 44, and the sealing member 44 abuts against the peripheral side surface of the terminal post 43, so that the performance of connection between the sealing member 44 and the terminal post 43 can be improved. In this way, the sealing performance of the sealing member 44 is enhanced, and the likelihood of liquid leakage in the energy-storage apparatus 3 is reduced. When the energy-storage apparatus 3 supplies power to the device body 21, the energy-storage apparatus 3 can provide a stable power source for the device body 21.

Reference is made to FIG. 1 and FIG. 2. The disclosure further provides an energy-storage system 1. The energy-storage system 1 includes a user load 11, an electric energy conversion apparatus 12, and the energy-storage apparatus 3 as provided above in the disclosure. The electric energy conversion apparatus 12 is configured to convert other forms of energy into electrical energy. The electric energy conversion apparatus 12 is electrically connected to the user load 11, and the electrical energy converted by the electric energy conversion apparatus 12 can be supplied to the user load 11. The energy-storage apparatus 3 is electrically connected to both the user load 11 and the electric energy conversion apparatus 12. The energy-storage apparatus 3 can store the electrical energy converted by the electric energy conversion apparatus 12, and is configured to supply power to the user load 11.

The energy-storage apparatus 3 provided above in the disclosure is applied to the energy storage system 1 provided in this embodiment. The second protruding ring 423 of the upper plastic member 42 abuts against the sealing member 44, and the sealing member 44 abuts against the peripheral side surface of the terminal post 43, so that the performance of connection between the sealing member 44 and the terminal post 43 can be improved. In this way, the sealing performance of the sealing member 44 is enhanced, and the likelihood of liquid leakage in the energy-storage apparatus 3 is reduced. When the energy-storage apparatus 3 supplies power to the user load 11, the energy-storage apparatus 3 can provide a stable power source for the user load 11.

Reference is made to FIG. 3 to FIG. 14. The disclosure further provides an assembly method for an end cover assembly 4. The assembly method includes S100, S200, S300, and S400. The details of S100, S200, S300, and S400 are as follows.

At S100, provide a top cover 41, a terminal post 43, and a sealing member 44. The top cover 41 has a first surface 411 and a second surface 412 opposite to the first surface 411. An assembly hole 413 is defined in the top cover 41, and the assembly hole 413 penetrates through the first surface 411 and the second surface 412.

At S200, sleeve the sealing member 44 on the terminal post 43 and cause the terminal post 43 to pass through the assembly hole 413, and position the sealing member 44 in the assembly hole 413.

At S300, provide an upper plastic member 42. The upper plastic member 42 includes a body 421, a first protruding ring 422, and a second protruding ring 423. The first protruding ring 422 is disposed on a side of the body 421. The second protruding ring 423 is disposed on a side of the first protruding ring 422 facing away from the body 421. The body 421, the first protruding ring 422, and the second protruding ring 423 cooperatively define a through hole 424.

At S400, mount the upper plastic member 42 to the top cover 41, and cause the terminal post 43 to pass through the through hole 424. The body 421 is mounted to the first surface 411. The first protruding ring 422 and the second protruding ring 423 are located in the assembly hole 413. There is a gap between a surface of the second protruding ring 423 facing away from the hole wall of the assembly hole 413 and a surface of the first protruding ring 422 facing away from the hole wall of the assembly hole. A surface of the second protruding ring 423 facing away from the first protruding ring 422 abuts against a surface of the sealing member 44 facing the upper plastic member 42, to cause a surface of the sealing member 44 facing away from the hole wall of the assembly hole 413 to abut against a peripheral side surface of the terminal post 43.

In this embodiment, the sealing member 44 is first sleeved on the terminal post 43, and the lower plastic member 46 is mounted to the second surface 412. Then, the terminal post 43, in the direction from the second surface 412 to the first surface 411, i.e., from bottom to top, is made to pass through the lower plastic member 46 and the top cover 41, and the sealing member 44 is positioned in the assembly hole 413. Next, the upper plastic member 42 is mounted to the top cover 41. The second protruding ring 423 of the upper plastic member 42 compresses the sealing member 44 to cause the surface of the sealing member 44 facing away from the hole wall of the assembly hole 413 to abut against the peripheral side surface of the terminal post 43. Subsequently, the riveting member 45 is mounted to the side of the upper plastic member 42 facing away from the top cover 41, and the riveting member 45 is sleeved on the terminal post 43. Through a riveting process, the riveting member 45 is connected to the terminal post 43, thereby fixing the top cover 41, the terminal post 43, the sealing member 44, and the upper plastic member 42 to obtain the assembled end cover assembly 4.

The assembly method for the end cover assembly 4 provided in this embodiment is simple and highly operable. The second protruding ring 423 of the upper plastic member 42 abuts against the sealing member 44, and the sealing member 44 abuts against the peripheral side surface of the terminal post 43, so that the performance of connection between the sealing member 44 and the terminal post 43 can be improved. In this way, the sealing performance of the sealing member 44 is enhanced, and thus the likelihood of liquid leakage in the end cover assembly 4 is reduced, and the likelihood of liquid leakage in the energy-storage apparatus 3 is reduced.

The embodiments of the disclosure are described in detail above. The principle and implementation of the disclosure are elaborated and described in this specification. The illustrations about the embodiments are merely provided to help understand the methods and core ideas of the disclosure. In addition, a person of ordinary skill in the art can make variations to the disclosure in terms of the specific embodiments and application scopes according to the ideas of the disclosure. Therefore, the content of this specification shall not be construed as a limitation to the disclosure.

## Claims

1. An end cover assembly, comprising:
a top cover having a first surface and a second surface opposite to the first surface, wherein an assembly hole is defined in the top cover, and the assembly hole penetrates through the first surface and the second surface;
an upper plastic member comprising a body, a first protruding ring, and a second protruding ring, wherein the body is disposed on the first surface, the first protruding ring is disposed on a side of the body facing the first surface and located in the assembly hole, the second protruding ring is disposed on a side of the first protruding ring facing away from the body and located in the assembly hole, a distance from an inner sidewall surface of the first protruding ring to a hole wall of the assembly hole is greater than a distance from an inner sidewall surface of the second protruding ring to the hole wall of the assembly hole, and the body, the first protruding ring, and the second protruding ring cooperatively define a through hole;
a terminal post passing through the assembly hole and the through hole; and
a sealing member sleeved on a periphery of the terminal post and located in the assembly hole; wherein a surface of the second protruding ring facing away from the first protruding ring abuts against a surface of the sealing member facing the upper plastic member, to cause a surface of the sealing member facing away from the hole wall of the assembly hole to abut against the peripheral side surface of the terminal post.

2. The end cover assembly according to claim 1, wherein the first protruding ring has a third surface facing the second protruding ring, and the sealing member abuts against the third surface located between the second protruding ring and the terminal post.

3. The end cover assembly according to claim 1, wherein a surface of the second protruding ring closer to the hole wall of the assembly hole is flush with a surface of the first protruding ring closer to the hole wall of the assembly hole.

4. The end cover assembly according to claim 1, wherein a surface of the second protruding ring facing away from the first protruding ring is closer to the first surface than the second surface.

5. The end cover assembly according to claim 1, wherein the upper plastic member satisfies at least one of the following conditions:
a surface junction between the second protruding ring and the first protruding ring has an arc chamfer; or
the second protruding ring has a top surface facing away from the first protruding ring and a side surface connected to the top surface in a bending manner, wherein the side surface is further connected to the first protruding ring, and a junction between the top surface and the side surface has an arc chamfer.

6. The end cover assembly according to claim 1, wherein a height *H*1 from a surface of the second protruding ring facing away from the body to a surface of the first protruding ring facing away from the body satisfies: 0.20mm ≤ *H*1 ≤ 0.30mm.

7. The end cover assembly according to claim 1, wherein the end cover assembly further comprises a riveting member mounted to a side of the body facing away from the first protruding ring, wherein the riveting member is sleeved on and connected to the terminal post, and an orthographic projection of the riveting member on the body facing the first surface covers both an orthographic projection of the first protruding ring on the body facing the first surface and an orthographic projection of the second protruding ring on the body facing the first surface.

8. The end cover assembly according to claim 1, wherein an annular recess is defined on a surface of the sealing member facing the upper plastic member, wherein the annular recess is arranged in a circumferential direction of the second protruding ring, and is configured to accommodate at least a portion of the second protruding ring.

9. The end cover assembly according to claim 8, wherein in an arrangement direction from the upper plastic member to the top cover, a recess sidewall of the annular recess is inclined toward a central axis of the annular recess.

10. The end cover assembly according to claim 8, wherein the sealing member satisfies at least one of the following conditions:
the annular recess has a recess bottom surface and a recess side surface connected to the recess bottom surface in a bending manner, and a junction between the recess bottom surface and the recess side surface has an arc chamfer; or
a junction between the recess side surface of the annular recess and the surface of the sealing member facing the upper plastic member has an arc chamfer.

11. The end cover assembly according to claim 8, wherein a recess depth of the annular recess is less than a height from a surface of the second protruding ring facing away from the body to a surface of the first protruding ring facing away from the body.

12. The end cover assembly according to claim 8, wherein a recess depth *H*2 of the annular recess satisfies: 0.10mm ≤ *H2* ≤ 0.20mm.

13. The end cover assembly according to any one of claims 1 to 12, wherein the terminal post comprises a flange portion and a post-body portion protruding from the flange portion, wherein the post-body portion passes through the assembly hole and the through hole, the flange portion is located on a side of the second surface; the sealing member comprises a first part and a second part connected to each other, wherein the first part abuts against both the second surface and a surface of the flange portion facing the top cover, the second part is closer to the post-body portion than the first part, and the second part abuts against the second protruding ring and abuts against a peripheral side surface of the post-body portion.

14. The end cover assembly according to claim 13, wherein an annular recess is defined on a surface of the second part facing the upper plastic member, wherein the annular recess is arranged in a circumferential direction of the second protruding ring, and is configured to accommodate at least a portion of the second protruding ring.

15. An energy-storage apparatus, comprising an electrode assembly, a housing, and the end cover assembly according to any one of claims 1 to 14, wherein the electrode assembly is disposed in the housing, and the end cover assembly is electrically connected to the electrode assembly.

16. An electricity-consumption device, comprising:
a device body; and
the energy-storage apparatus according to claim 15, wherein the energy-storage apparatus is configured to supply power to the device body.
